# EUROPEAN PATENT SPECIFICATION

(11) **EP 0 773 234 B1**
(45) Date of publication and mention of the grant of the patent: **23.08.2000**
(21) Application number: 96203157.1
(22) Date of filing: 12.11.1996
(51) Int. Cl.: C08F 8/30, C10L 1/22, C10M 159/12, C10M 133/52, C10M 149/06

(54) **Dispersant additives**
Dispergierzusätze
Additifs dispersants

(30) Priority: 13.11.1995 EP 95308088
(43) Date of publication of application: 14.05.1997
(73) Proprietor: SHELL INTERNATIONALE RESEARCH MAATSCHAPPIJ B.V., 2596 HR Den Haag (NL)
(72) Inventor: Scott, Richard Mark, Sittingbourne, Kent ME9 8HX (GB); Shaw, Robert William, Chester, Cheshire CH4 (GB)
(74) Representative: Hart, Richard Joseph

(56) References cited:
- EP-A- 0 331 397
- EP-A- 0 337 602
- EP-A- 0 352 070
- EP-A- 0 352 072
- EP-A- 0 365 288
- EP-A- 0 441 548
- EP-A- 0 450 876
- EP-A- 0 677 572
- EP-A- 0 682 102
- GB-A- 1 274 647
- GB-A- 2 097 800
- US-A- 3 455 827
- US-A- 4 471 091
- US-A- 4 670 173

## Description

The present invention relates to reaction products of polyalkenes, a process for their preparation, lubricating oil compositions, fuel compositions and additive concentrates containing them and their use as dispersant additives.

It has surprisingly been found that certain nitrogen-containing reaction products of polyalkenes have low haze and good dispersancy properties and exhibit good compatibility towards seals and bearings.

In accordance with the present invention, there is provided the reaction product of:
(i) an oligomer having a number average molecular weight of no more than 7500 and being formed from one monomer or two or more different monomers, the or each monomer being an ethylenically unsaturated compound and said oligomer or each of said monomers being optionally partially or fully esterified, each of which monomers may not contain an ether moiety nor be a cyclopentadienyl group, said oligomer optionally being reacted with a low molecular weight amine, with
(ii) a polyalkenyl derivative of an ethylenically unsaturated carboxylic reagent (iii), which derivative has a number average molecular weight of at least 1600 when the oligomer is a co-oligomer of two monomers one of which is a straight chain olefin, and
(iv) a polyamine containing at least two -NH₂ and/or -NH groups, or with
(v) the pre-formed product of reagents (ii) and (iv),
wherein at least one of the ethylenically unsaturated compounds of the oligomer is an ethylenically unsaturated carboxylic reagent, the oligomeric reaction product optionally being further reacted with a low molecular weight amine.

The oligomer (i) preferably has a number average molecular weight of no more than 5000, more preferably no more than 4000.

The low molecular weight amine is one having a molecular weight in the range 17 to 300, such as oleylamine or benzylamine, aniline being particularly preferred; or a polyamine, suitably as defined in (iv) above.

The ethylenically unsaturated carboxylic reagent (iii) contains a total of at least 3 carbon atoms, preferably a total of from 3 to 50, more preferably from 3 to 30, still more preferably from 4 to 20, and even more preferably from 4 to 10, carbon atoms.

The ethylenically unsaturated carboxylic reagent may be an alpha-beta olefinic unsaturated carboxylic reagent as described at page 6, lines 15 to 48 of EP-B-0285609 or page 6, lines 11 to 39 of EP-B-0287569, e.g. acrylic acid (C₃), methacrylic acid (C₄), cinnamic acid (C₉), crotonic acid (C₄), 2-phenylpropenoic acid (C₉), maleic acid (C₄), fumaric acid (C₄), glutaconic acid (C₅), mesaconic acid (C₅), itaconic acid (methylene succinic acid) (C₅), citraconic acid (methyl maleic acid) (C₅) and functional derivatives thereof such as anhydrides (e.g. maleic anhydride (C₄), glutaconic anhydride (C₅), itaconic anhydride (C₅), citraconic anhydride (C₅)), esters (e.g. methyl acrylate (C₄)), amides, imides, salts, acyl halides and nitriles.

Preferably the ethylenically unsaturated carboxylic reagent (iii) is selected from monoethylenically unsaturated C₄-C₁₀ dicarboxylic acids and anhydrides, of which maleic anhydride is most preferred.

The polyalkenyl derivative (ii) of an ethylenically unsaturated carboxylic reagent (iii) may be prepared by methods known in the art. For example, if the ethylenically unsaturated carboxylic reagent (iii) is maleic anhydride, the polyalkenyl derivative thereof may conveniently be prepared by mixing a polyalkene with a specified amount of maleic anhydride and passing chlorine through the mixture, e.g. as described in GB-A-949981. Alternatively, the derivative may be prepared by reacting thermally, at an appropriate temperature, the polyalkene with a specified amount of maleic anhydride, e.g. as described in GB-A-1483729. A particularly preferred process for preparing such a derivative, which is described in EP-A-0542380, involves reacting the polyalkene with maleic anhydride in a mol ratio of maleic anhydride to polyalkene of greater than 1:1, at a temperature in the range from 150 to 260°C and in the presence of a polyaddition-inhibiting amount of a sulphonic acid. The molar ratio of ethylenically unsaturated carboxylic moiety to polyalkenyl moiety in the derivative formed is preferably 1:1 to 5:1, more preferably 1:1 to 1.3:1, particularly 1:1 to 1.2:1.

The polyalkene used to prepare the polyalkene derivative may be a homopolymer or copolymer, for example of at least one C₂₋₁₀ monoolefin. Preferably the polyalkene is a polymer of at least one C₂₋₅ monoolefin, e.g. an ethylene-propylene copolymer. The monoolefin is preferably a C₃₋₄ olefin, in particular propylene or isobutylene, and preferred polyalkenes derived therefrom include polyisobutylenes and atactic or isotactic or syndiotactic propylene oligomers. Polyisobutylenes such as that sold by BASF under the trade mark "GLISSOPAL" and those sold by the British Petroleum Company under the trade marks "ULTRAVIS, "HYVIS" and "NAPVIS", e.g. "HYVIS 75", "HYVIS 120", "HYVIS 200" and "NAPVIS 120" polyisobutylenes, are especially preferred for use in the present invention.

The polyalkene has a number average molecular weight (Mₙ) preferably in the range from 300 to 7000, more preferably from 500 to 5000, still more preferably from 700 to 3000.

The polyamine (iv) contains at least two -NH₂ and/or -NH groups, the groups each having at least one active hydrogen thereon. Examples of polyamines useful in the present invention are those described in the text from page 16, line 21 to page 19, line 53 of EP-B-0287569.

Preferably the polyamine is a compound of the general formula

H₂N-(CHR¹)ₓ-CH₂-[A-CH₂-(CHR¹)ₓ]_{y}-NH₂ (I)

wherein A is -NH or -O-, each R¹ independently represents a hydrogen atom or a methyl group, x is in the range 1 to 3, and y is in the range 1 to 10 when A is -NH or y is in the range 1 to 200 when A is -O-.

In formula (I) above, it is preferred that when A is -NH, then x is 1, each R¹ represents a hydrogen atom, and y is in the range 1 to 8; or when A is -O-, then x is 1, each R¹ represents a methyl group and y is in the range 1 to 50.

Reagent (v) is the pre-formed product of reagents (ii) and (iv) and may be prepared according to techniques conventional in the art. Thus, for example, if the reagent (ii) is a polyalkenyl derivative of maleic anhydride and the polyamine is ethylene polyamine, they may conveniently be reacted together in a molar ratio of polyalkenyl derivative to polyamine from 1 - 4:1, in a hydrocarbon solvent at a temperature in the range from 100 to 250°C, e.g. as described in EP-A-0587250. The molar coupling ratio of polyalkenyl derivative to amine in the product is preferably in the range 1:1 to 3:1, more preferably 1:1 to 2.5:1.

The ethylenically unsaturated compounds may be selected from any compounds that can be oligomerised, for example alpha-olefins and alpha-beta-unsaturated carbonyl compounds. Particularly suitable compounds include styrene, maleic anhydride and acrylic acid.

The reaction between said ethylenically unsaturated monomers to form the oligomer may be carried out by radical cationic or anionic oligomerisation. Said oligomers are selected from those having a functional group that will react with an amine, more preferably styrene copolymerised with maleic anhydride, styrene copolymerised with acrylic acid, polyacrylic acid, and alpha-olefins copolymerised with maleic anhydride.

Reaction products of the present invention, whether produced from oligomers (i) in which either the oligomer or one or more of the monomers thereof has been partially or fully esterified, or from oligomers (i) in respect of which there has been no such esterification, exhibit good dispersancy properties. It has been found that many of the reaction products (especially esters) exhibit low haze levels, thus reducing the need for further treatment such as filtration. Such esterification of these oligomers or their monomers may be carried out by reaction with an alcohol, e.g. C₁₋₂₀ aliphatic or aromatic alcohols, preferably in the presence of a catalyst such as paratoluenesulphonic acid (PTSA).

However, there are commercially available (1) co-oligomers of such ethylenically unsaturated compounds, and (2) partially-esterified forms of co-oligomers (1). Examples of (1) are styrene/maleic anhydride co-oligomers (SMA), such as those sold by Elf-Atochem under the trade names "SMA 1000A", "SMA 2000A" and "SMA 3000A". An example of (2) is a half-ester of said "SMA 3000A" with iso-octyl alcohol, sold by Elf-Atochem under the trade name "SMA 3840A". It has been found that by use of partially- or fully-esterified forms of such commercially available SMAs, such as commercially available partially-esterified forms of the SMAs, or by use of esterified polyacrylic acid, for example, poly n-amyl acrylate, dispersants can be produced having low haze levels (as measured according to ASTM D1003).

The esterification of the SMAs to produce fully esterified oligomers, i.e. diesters, is preferably carried out using C₁₋₂₀ aliphatic or aromatic alcohols, more preferably C₅₋₈ branched aliphatic alcohols, in particular iso-amyl alcohol (which is a mixture of branched alcohols, mainly 3-methylbutan-1-ol and 2-methylbutan-1-ol) or iso-octyl alcohol, more particularly in excess. The esterification of polyacrylic acid is preferably carried out using C₁₋₂₀ aliphatic or aromatic alcohols, for example straight chain aliphatic alcohols, in particular n-amyl alcohol. Said esterification processes are preferably carried out at a temperature in the range 0 to 250°C, more preferably 70 to 190°C, at a pressure in the range 0.5 to 10 atmospheres (50 to 1000 kPa), more preferably atmospheric pressure, in the presence of a solvent, more preferably selected from alcohols, aromatic hydrocarbons such as toluene, xylene and mesitylene, and ethers such as tetrahydrofuran and 1,4-dioxane, and mixtures thereof, and in the presence of a catalyst, more preferably selected from acids such as sulphuric acid and PTSA, Lewis acids such as aluminium chloride, and bases such as pyridine and 4-(N,N-dimethylamino)pyridine. Where the solvent is reactive, e.g. an alcohol such as iso-octyl alcohol, reaction with the oligomer (i) may occur concomitantly with reaction with the polyamine (iv) or with (v).

The present invention further provides a process for the preparation of a reaction product as defined above which comprises reacting
(i) an oligomer having a number average molecular weight of no more than 7500 and being formed from one monomer or two or more different monomers, the or each monomer being an ethylenically unsaturated compound and said oligomer or each of said monomers being optionally partially or fully esterified, each of which monomers may not contain an ether moiety nor be a cyclopentadienyl group, said oligomer optionally being reacted with a low molecular weight amine,. with
(ii) a polyalkenyl derivative of an ethylenically unsaturated carboxylic reagent (iii), which derivative has a number average molecular weight of at least 1600 when the oligomer is a co-oligomer of two monomers one of which is a straight chain olefin, and
(iv) a polyamine containing at least two -NH₂ and/or -NH groups, or with
(v) the pre-formed product of reagents (ii) and (iv),
wherein at least one of the ethylenically unsaturated compounds of the oligomer is an ethylenically unsaturated carboxylic reagent, the oligomeric reaction product optionally being further reacted with a low molecular weight amine.

The reaction between (i), (ii) and (iv) or between (i) and (v) is preferably conveniently carried out in the presence of a suitable solvent at elevated temperature (i.e. above ambient temperature (20°C)), e.g. in the temperature range 25 to 200°C, more particularly 160 to 200°C, often under reflux conditions and, where necessary, at elevated pressure, e.g. in the range from 2 to 100 x 10⁵ Pa· Examples of solvents include hydrocarbon solvents such as hexane, cyclohexane, toluene, xylene, mesitylene; also synthetic and mineral oils such as "HVI-60"; ether solvents such as tetrahydrofuran and 1,4-dioxane; nitriles such as acetonitrile; alcohols such as 1-pentanol (amyl alcohol) and 2-methyl-2-propanol (tert-butyl alcohol); and chlorohydrocarbons such as 1,1,1-trichloroethane. The process may be carried out in the absence of a solvent but, as indicated above, is conveniently carried out in the presence of one. Any water or excess of alcohol may be removed using for example a Dean and Stark trap.

The weight ratio (ii):(iv) in the process of the present invention is preferably in the range from 100:1 to 5:1, more preferably from 33:1 to 13:1, and the weight ratio (iv):(i) is preferably in the range from 1:20 to 20:1, more preferably from 1:5 to 5:1.

The reaction product of the present invention may be used as a dispersant additive in lubricating oils. Accordingly, the present invention provides a lubricating oil composition comprising a major amount (more than 50%w) of a lubricating oil and a minor amount (less than 50%w), preferably from 0.1 to 20%w, especially from 0.5 to 10%w (active matter), of a reaction product according to the present invention, the percentages by weight being based on the total weight of the composition.

Suitable lubricating oils are natural, mineral or synthetic lubricating oils.

Natural lubricating oils include animal and vegetable oils, such as castor oil. Mineral oils comprise the lubricating oil fractions derived from crude oils, coal or shale, which fractions may have been subjected to certain treatments such as clay-acid, solvent or hydrogenation treatments. Synthetic lubricating oils include synthetic polymers of hydrocarbons, modified alkylene oxide polymers, and ester lubricants, which are known in the art. These lubricating oils are preferably crankcase lubricating oils for spark-ignition and compression-ignition engines, but include also hydraulic lubricants, metal-working fluids and automatic transmission fluids.

Preferably the lubricating base oil component of the compositions according to the present invention is a mineral lubricating oil or a mixture of mineral lubricating oils, such as those sold by member companies of the Royal Dutch/Shell Group under the designations "HVI", or the synthetic hydrocarbon base oils sold by member companies of the Royal Dutch/Shell Group under the designation "XHVI" (trade mark).

The viscosity of the lubricating base oils present in the compositions according to the present invention may vary within wide ranges, and is generally from 3 to 35 mm²/s at 100°C.

The lubricating oil compositions according to the present invention may contain various other additives, known in the art, such as viscosity index improvers, e.g. linear or star-shaped polymers of a diene such as isoprene or butadiene, or a copolymer of such a diene with optionally substituted styrene. These copolymers are suitably block copolymers and are preferably hydrogenated to such an extent as to saturate most of the olefinic unsaturation. Other suitable additives include dispersant V.I. improvers such as those based on block copolymers, or polymethacrylates, extreme pressure/anti-wear additives such as zinc or sodium dithiophosphates, ashless dispersants such as polyolefin-substituted succinimides, e.g. those described in GB-A-2231873, anti-oxidants, anti-rust additives, friction modifiers or metal-containing detergents such as phenates, sulphonates, alkylsalicylates or naphthenates, all of which detergents may be overbased.

The reaction product of the present invention may also be used as a dispersant additive in fuels. Accordingly, the present invention further provides a fuel composition comprising a major amount (more than 50%w) of a fuel and a minor amount (less than 50%w), preferably from 0.001 to 2%w, more preferably from 0.001 to 0.5%w and especially from 0.002 to 0.2%w (active matter), of a reaction product according to the invention, the percentages by weight being based on the total weight of the composition.

Suitable fuels include gasoline and diesel fuel. These base fuels may comprise mixtures of saturated, olefinic and aromatic hydrocarbons. They can be derived from straight-run gasoline, synthetically produced aromatic hydrocarbon mixtures, thermally or catalytically cracked hydrocarbon feedstocks, hydrocracked petroleum fractions or catalytically reformed hydrocarbons.

The fuel compositions according to the present invention may contain various other additives known in the art such as a lead compound as anti-knock additive; antiknock additives other than lead compounds such as methyl cyclopentadienyl-manganese tricarbonyl or orthoazidophenyl; co-antiknock additives such as benzoylacetone; dehazers (e.g. ethoxylated glycerols such as that commercially available as "SURDYNE" (trade mark) M155 (ex Shell Chemicals, UK) or alkoxylated phenol formaldehyde polymers such as those commercially available as "NALCO" (trade mark) 7DO7 (ex Nalco), "TOLAD" (trade mark) 2683 (ex Petrolite) or "SURDYNE" (trade mark) D265, M153, M154 or M156 (ex Shell Chemicals, UK)); anti-foaming agents (e.g. the polyether-modified polysiloxanes commercially available as "TEGOPREN" (trade mark) 5851, Q 25907 (ex Dow Corning) or "RHODORSIL" (trade mark) ex Rhone Poulenc)); ignition improvers (e.g. 2-ethylhexyl nitrate, cyclohexyl nitrate, di-tertiary-butyl peroxide and those disclosed in US-A-4208190 at Column 2, line 27 to Column 3, line 21); anti-rust agents (e.g. that commercially sold by Rhein Chemie, Mannheim, Germany as "RC 4801", or polyhydric alcohol esters of a succinic acid derivative, the succinic acid derivative having on at least one of its alpha carbon atoms an unsubstituted or substituted aliphatic hydrocarbon group containing from 20 to 500 carbon atoms (e.g. the pentaerythritol diester of polyisobutylene-substituted succinic acid); reodorants; anti-wear additives; anti-oxidants (e.g. phenolics such as 2,6-di-tert-butylphenol, or phenylenediamines such as N,N'-di-sec-butyl-p-phenylenediamine); metal deactivators; lubricity agents (e.g. those commercially available as EC831 (ex Paramins) or "HITEC" (trade mark) 580 (ex Ethyl Corporation)); or carrier fluids such as a polyether e.g. a C₁₂-C₁₅ alkyl-substituted propylene glycol ("SAP 949" which is commercially available from member companies of the Royal Dutch/Shell group), "HVI" or "XHVI" (trade mark) base oil, a polyolefin derived from C₂-C₆ monomers, e.g. polyisobutylene having from 20 to 175, particularly 35 to 150, carbon atoms, or a polyalphaolefin having a viscosity at 100°C in the range 2 x 10⁻⁶ to 2 x 10⁻⁵ m²/s (2 to 20 centistokes), being a hydrogenated oligomer containing 18 to 80 carbon atoms derived from at least one alphaolefinic monomer containing from 8 to 18 carbon atoms.

The lubricating oil and fuel compositions of the invention may be prepared by adding the reaction product of the present invention to a lubricating oil or fuel. Conveniently, an additive concentrate is blended with the lubricating oil or fuel. Such a concentrate generally comprises an inert carrier fluid and one or more additives in a concentrated form. Hence the present invention also provides an additive concentrate comprising an inert carrier fluid and from 10 to 80%w (active matter) of a reaction product according to the present invention, the percentages by weight being based on the total weight of the concentrate.

Examples of inert carrier fluids include hydrocarbons and mixtures of hydrocarbons with alcohols or ethers, such as methanol, ethanol, propanol, 2-butoxyethanol or methyl tert-butyl ether. For example, the carrier fluid may be an aromatic hydrocarbon solvent such as toluene, xylene, mixtures thereof or mixtures of toluene or xylene with an alcohol. Alternatively, the carrier fluid may be a mineral base oil or mixture of mineral base oils, such as those sold by member companies of the Royal Dutch/Shell Group under the designations "HVI", e.g. "HVI 60" base oil, or the synthetic hydrocarbon base oils sold by member companies of the Royal Dutch/Shell Group of Companies under the designation "XHVI" (trade mark).

The present invention still further provides the use of a reaction product according to the present invention as a dispersant additive.

The present invention will be further understood from the following illustrative Examples. In these Examples, the number average molecular weights (Mₙ) specified for the polyisobutenyl moieties in the polyisobutenyl succinic anhydride/succinimide and the atactic propylene oligomer moieties in the atactic propylene oligomer based succinic anhydride/succinimide were determined by modern gel chromatography using polystyrene standards, e.g. as described in W.W. Yau, J.J. Kirkland and D.D. Bly, "Modern Size Exclusion Liquid Chromatography", John Wiley and Sons, New York, 21979.

Active matter content was determined by separating inactive material from the desired active matter on an aluminium oxide column using diethyl ether as eluant; acid value was determined according to ASTM D 664; and Total Base Number was determined in accordance with ASTM D 2896.

In the Examples, the following abbreviations are used:-

| | |
|---|---|
| PIBSA | a polyisobutenyl succinic anhydride in which the polyisobutenyl moiety has Mₙ (as measured by GPC) of 2200 ± 200 in Examples 1 to 21, 37 to 52, 55 and 56, and 1000 ± 200 in Examples 22 to 36, 53, 54 and 57, prepared by the process according to EP-A-0542380 |
| APOSA | an atactic propylene oligomer based succinic anhydride in which the atactic propylene oligomer moiety has Mₙ (as measured by GPC) of 2200 ± 200 in Examples 58 to 60, and 835 ± 100 in Example 61, prepared by the process according to EP-A-0490454 |
| TETA | triethylene tetramine |
| TEPA | tetraethylene pentamine |
| PEHA | pentaethylene hexamine |
| S75 | a polyamine mixture containing tetraethylene pentamine, pentaethylene hexamine and higher ethylene polyamines in a weight ratio of 1:2:1 which is commercially available from Delamine B.V., Netherlands |

### Example 1

A mono-ester of "SMA 3000A" and iso-octyl alcohol ("SMA 3840A" ex. Elf-Atochem) (1.5g) dissolved in "SHELLSOL A" (trade mark) (aromatic-rich (99% aromatics), high boiling (B.Pt. 166-180°C) solvent (ex. Shell Nederland Chemie B.V.)) (150 ml) was added to a stirred solution of the reaction product of PIBSA and S75 (having a coupling ratio (mols of PIBSA to mols of polyamine) of 1.5 ± 0.1) (50g, 40.9% active matter ) in "SHELLSOL A" (50 ml) at 150°C. The reaction temperature was increased at approx. 15°C per hour and the "SHELLSOL A", water and any alcohol released was removed by a Dean and Stark trap. Heating rates can be varied. Once the temperature had reached 200°C, the reaction was held at this temperature for 1 hour. The excess solvent was removed under reduced pressure.

### Examples 2 to 41

By processes similar to that described in Example 1 above, further reaction products of the present invention were prepared, namely those of Examples 2 to 41. The coupling ratio used in Example 21 was 1.2 ± 0.1 and that used in Examples 37 and 38 was 1.0 ± 0.1.

Details of the types and amounts of the reagents used and, where known, the total base number and nitrogen content of the polyimide derivatives as obtained are presented in Table 1 below, in which the percentage of reactant B is of the total weight of reactant A without adjustment to take account of the percentage of active matter in A:-

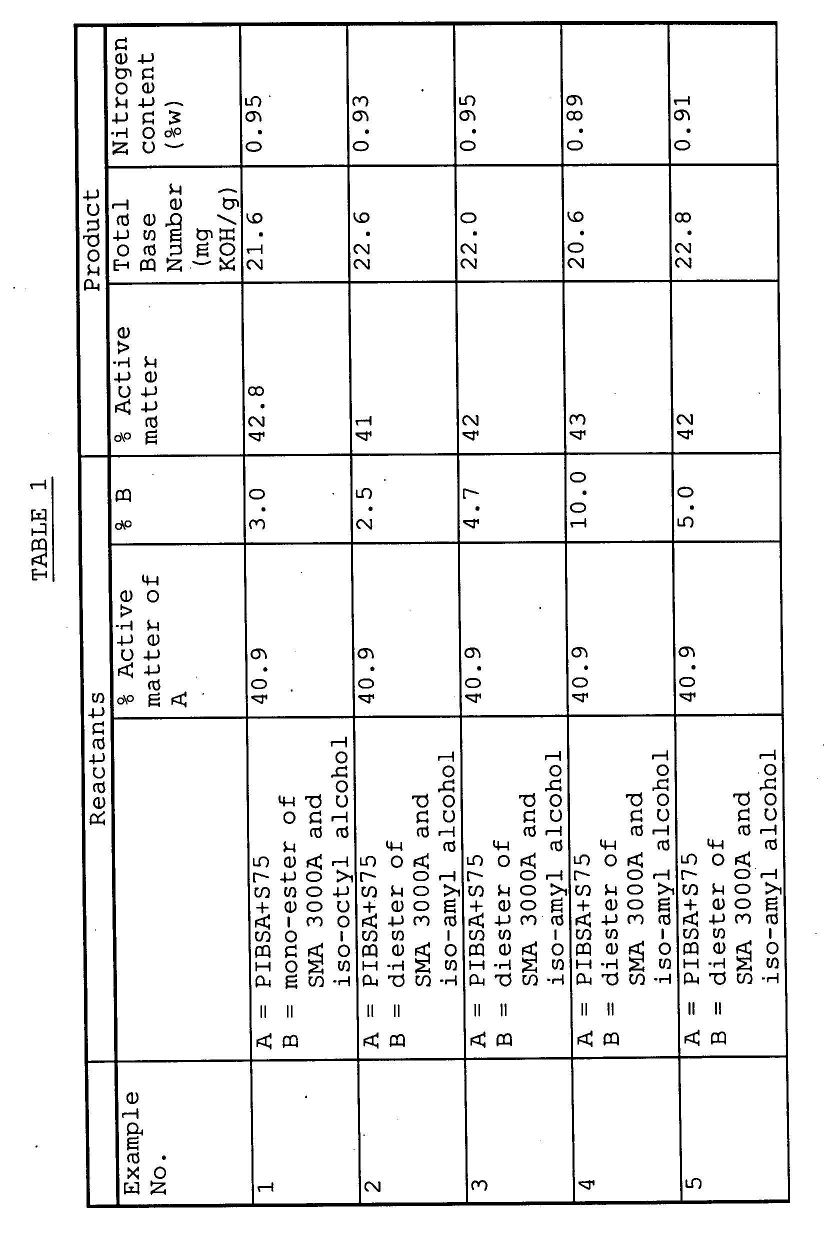

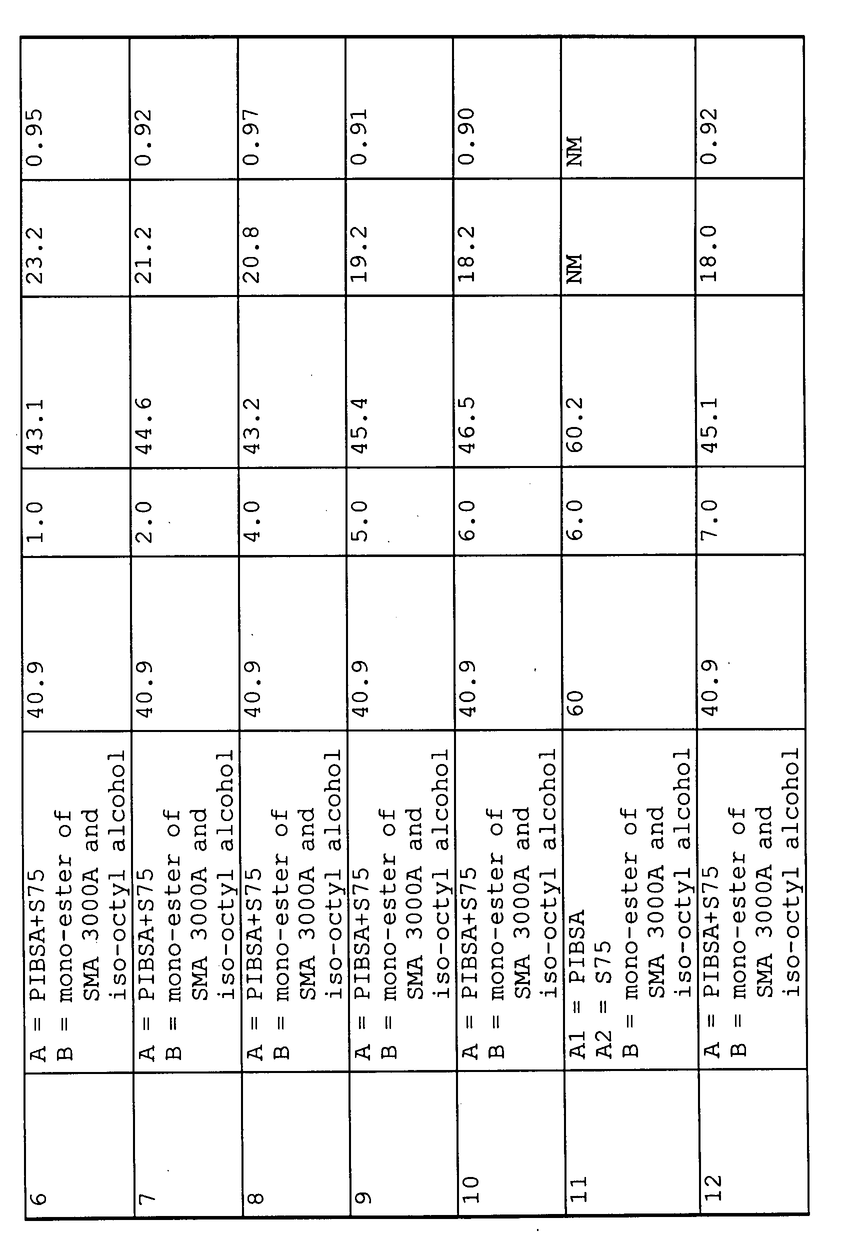

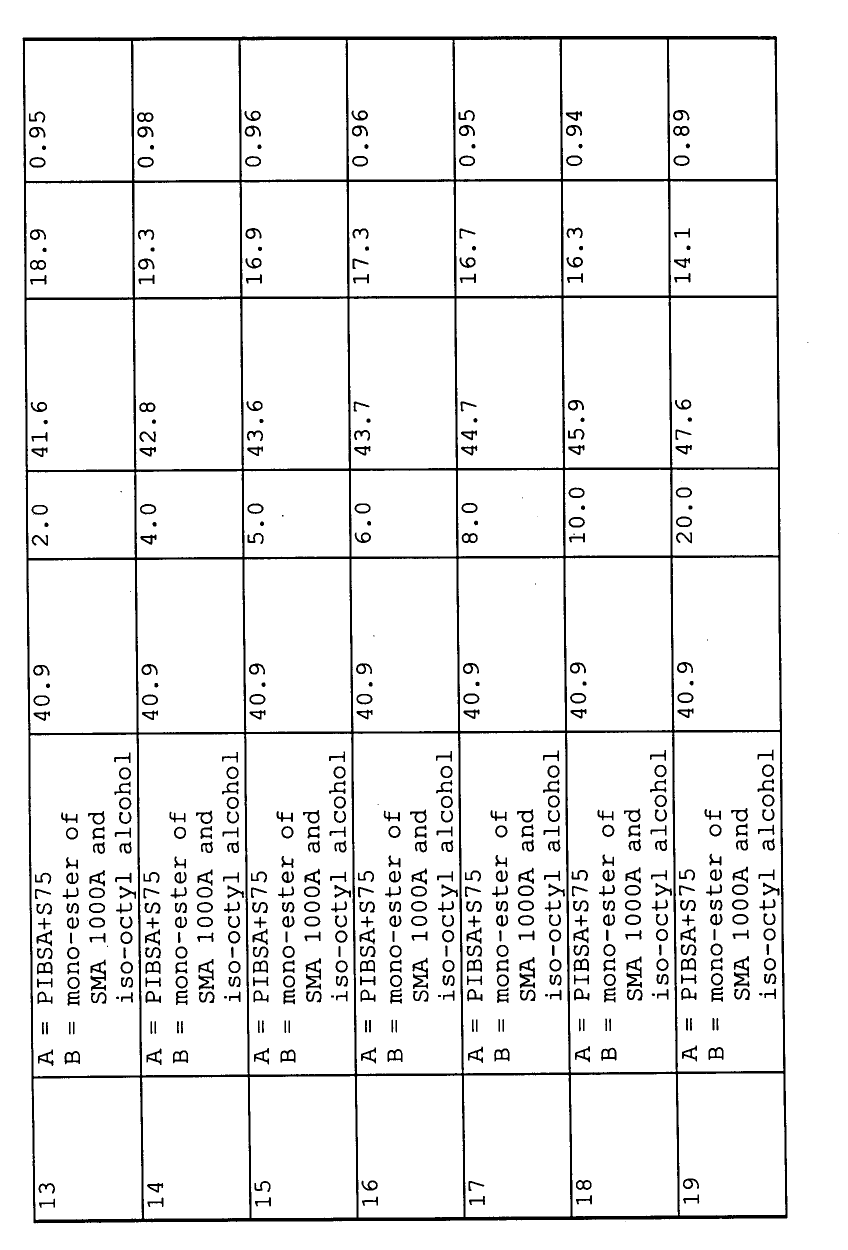

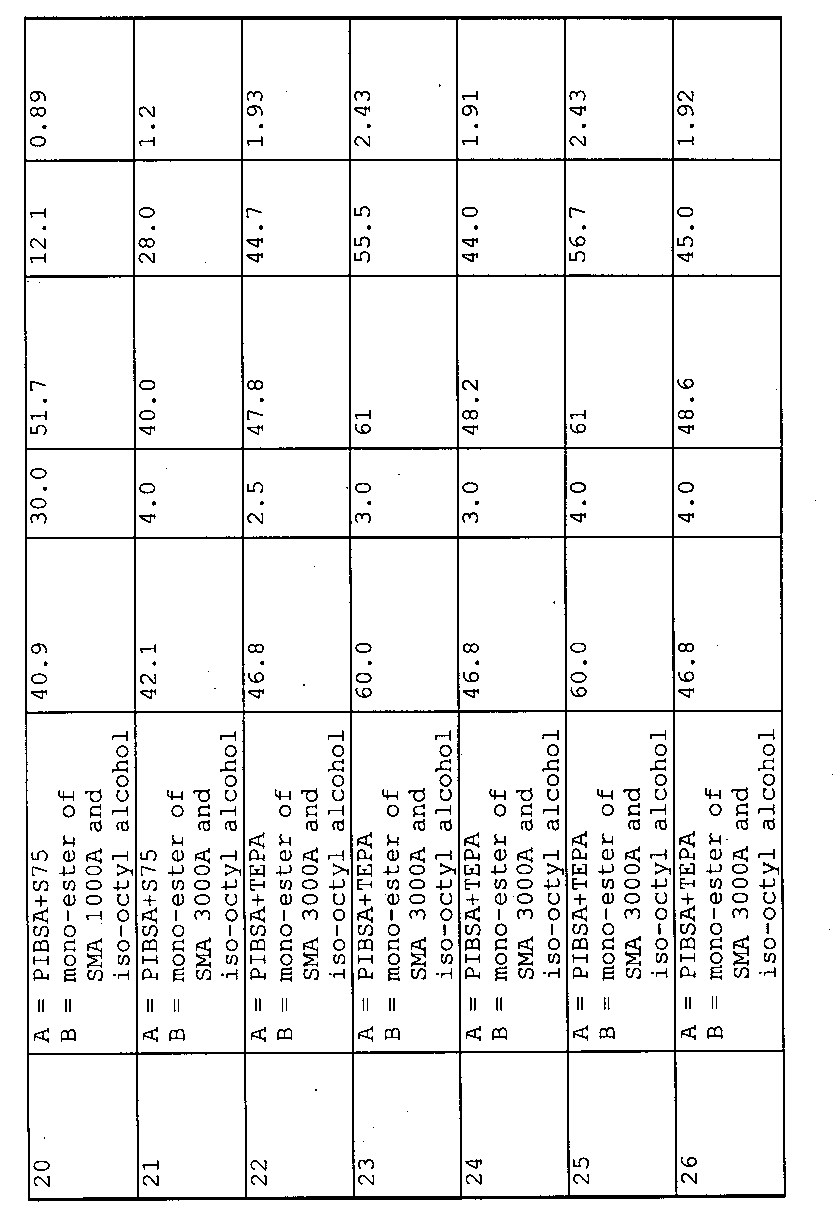

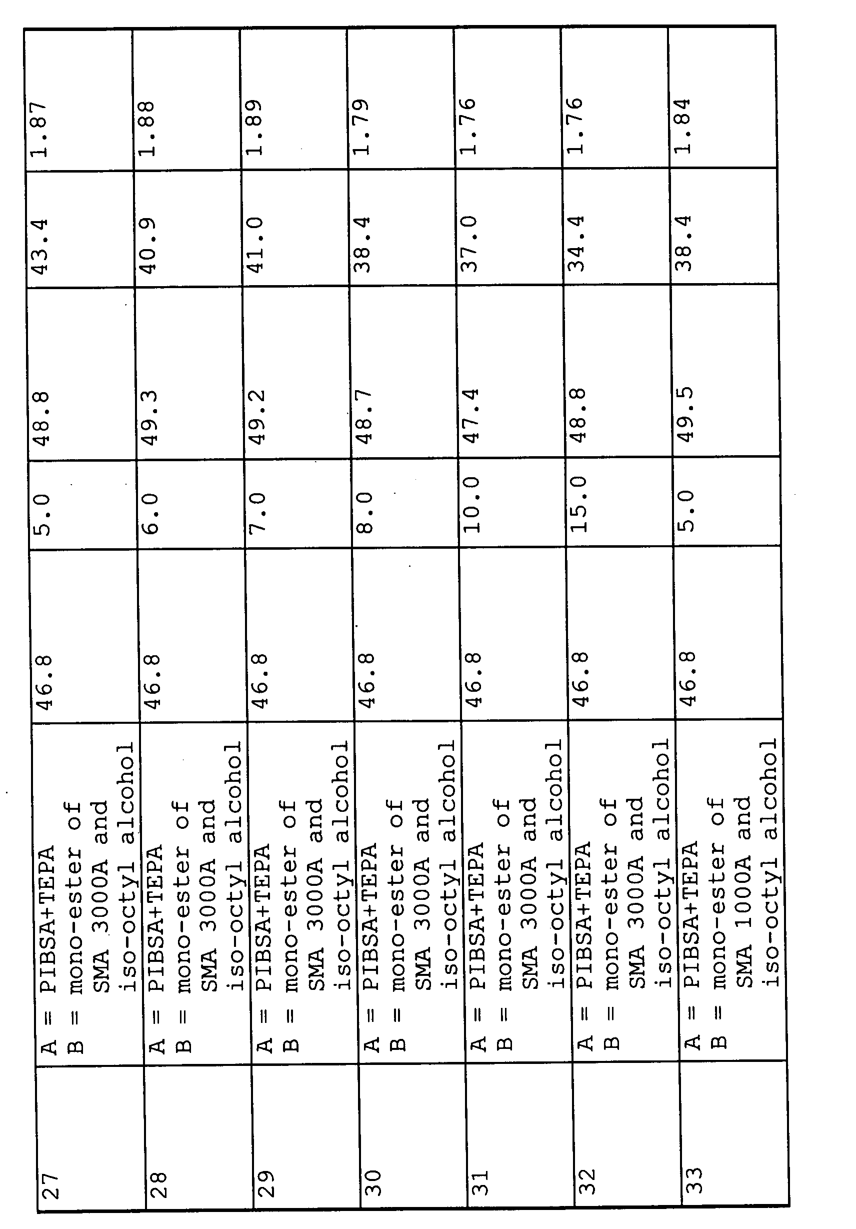

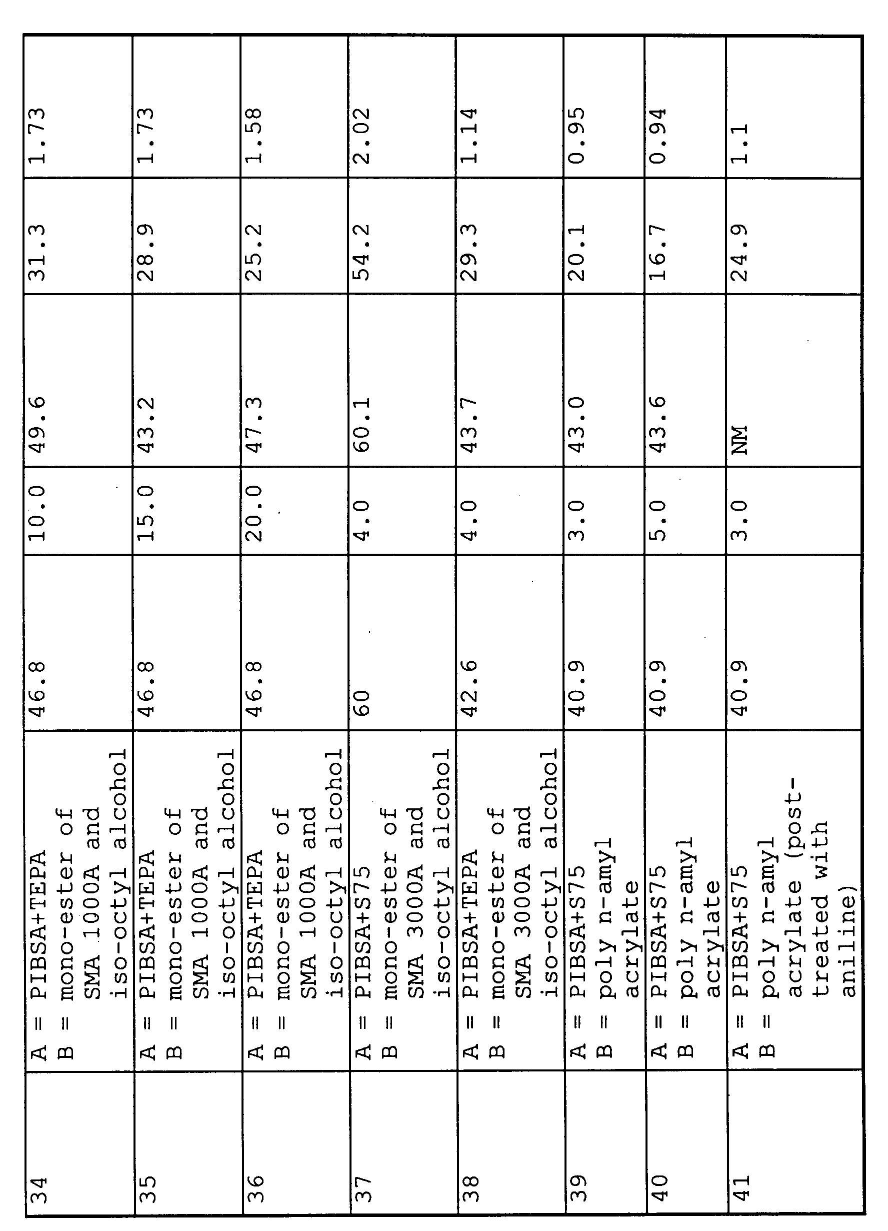

In the above Examples, and those that follow below:
(a) "SMA 3000A" is a styrene/maleic anhydride oligomer (Mₙ 2350) in which the mole ratio of styrene:maleic anhydride is 3 (ex. Elf-Atochem)
(b) "SMA 1000A" is a styrene/maleic anhydride oligomer (Mₙ 962) in which the mole ratio of styrene:maleic anhydride is 1 (ex. Elf-Atochem)
(c) Reactant B in Examples 1, 6 to 12, 21 to 32, 37 and 38 was "SMA 3840A", a low molecular weight (Mₙ 3120) oligomer in which the mole ratio of styrene:maleic anhydride is 3, and in which the maleic anhydride has been reacted with iso-octyl alcohol to form the mono-ester (ex. Elf-Atochem)
(d) Reactant B in Examples 39 to 41 was a low molecular weight (approx. 1000) polyacrylic acid esterified with n-amyl alcohol
(e) Reactant A in Examples 1 to 10, 12 to 20, 22 to 36 and 39 to 41 had a coupling ratio (mols of PIBSA to mols of polyamine) of 1.5 ± 0.1
(f) Reactant A in Example 21 had a coupling ratio (mols of PIBSA to mols of polyamine) of 1.2 ± 0.1
(g) Reactant A in Examples 37 and 38 had a coupling ratio (mols of PIBSA to mols of polyamine) of 1.0 ± 0.1
(h) Reactant A in Examples 22 to 36, 53, 54 and 57 was "SAP 230TP", a mono/bis succinimide ashless dispersant (ex. Shell Additives International Ltd.)
(i) Reactant A in Examples 43 to 47 and 56 was "SAP 285", a high molecular weight bis succinimide ashless dispersant (ex. Shell Additives International Ltd.)
(j) 'NM' = Not Measured

### Example 42

"SMA 3000A" (1.65g) dissolved in mesitylene (50 ml) at 100°C was added to a stirred solution of the reaction product of PIBSA and S75 (having a coupling ratio (mols PIBSA to mols of polyamine) of 1.5 ± 0.1) (50g, 40.9% active matter) in "SHELLSOL A" (50 ml) at 140°C under nitrogen. The reaction temperature was increased and the "SHELLSOL A" and water was gradually removed by a Dean and Stark trap, over 4 hours. Once the temperature had reached 200°C the reaction was held at this temperature for 15 hours. The excess solvent was removed under reduced pressure (120°C at 5 mm Hg for 2 hours) to give a dark brown clear liquid (51g).

Details of the types and amounts of the reagents used and the total base number and nitrogen content of the polyimide derivative as obtained are presented in Table 2 below, in which the percentage of reactant B is of the total weight of reactant A without adjustment to take account of the percentage of active matter in A:-

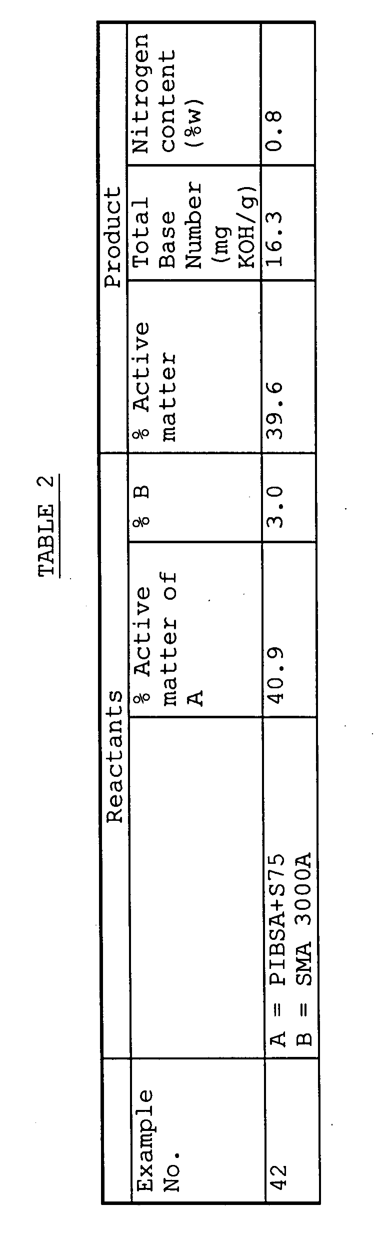

### Example 43

A mono-ester of "SMA 3000A" and iso-octyl alcohol ("SMA 3840A" ex. Elf-Atochem) (4.0g) dissolved in xylene (40 ml) was added to a stirred solution of the reaction product of PIBSA and S75 (having a coupling ratio (mols of PIBSA to mols of polyamine) of 2.0 ± 0.2) (100g, 42.0% active matter) in xylene (100 ml) at 140°C under nitrogen. The reaction temperature was increased and the xylene, water and any alcohol were gradually removed by a Dean and Stark trap, over 4 hours. Once the temperature had reached 200°C the reaction was held at this temperature for 1 hour. The excess solvent was removed under reduced pressure (110°C at 5 mm Hg for 2 hours) to give a dark brown clear liquid (100g).

### Examples 44 to 47

By processes similar to that described in Example 43 above, further reaction products of the present invention were prepared.

Details of the types and amounts of the reagents used and the total base number and nitrogen content of the polyimide derivatives as obtained are presented in Table 3 below, in which the percentage of reactant B is of the total weight of reactant A without adjustment to take account of the percentage of active matter in A:-

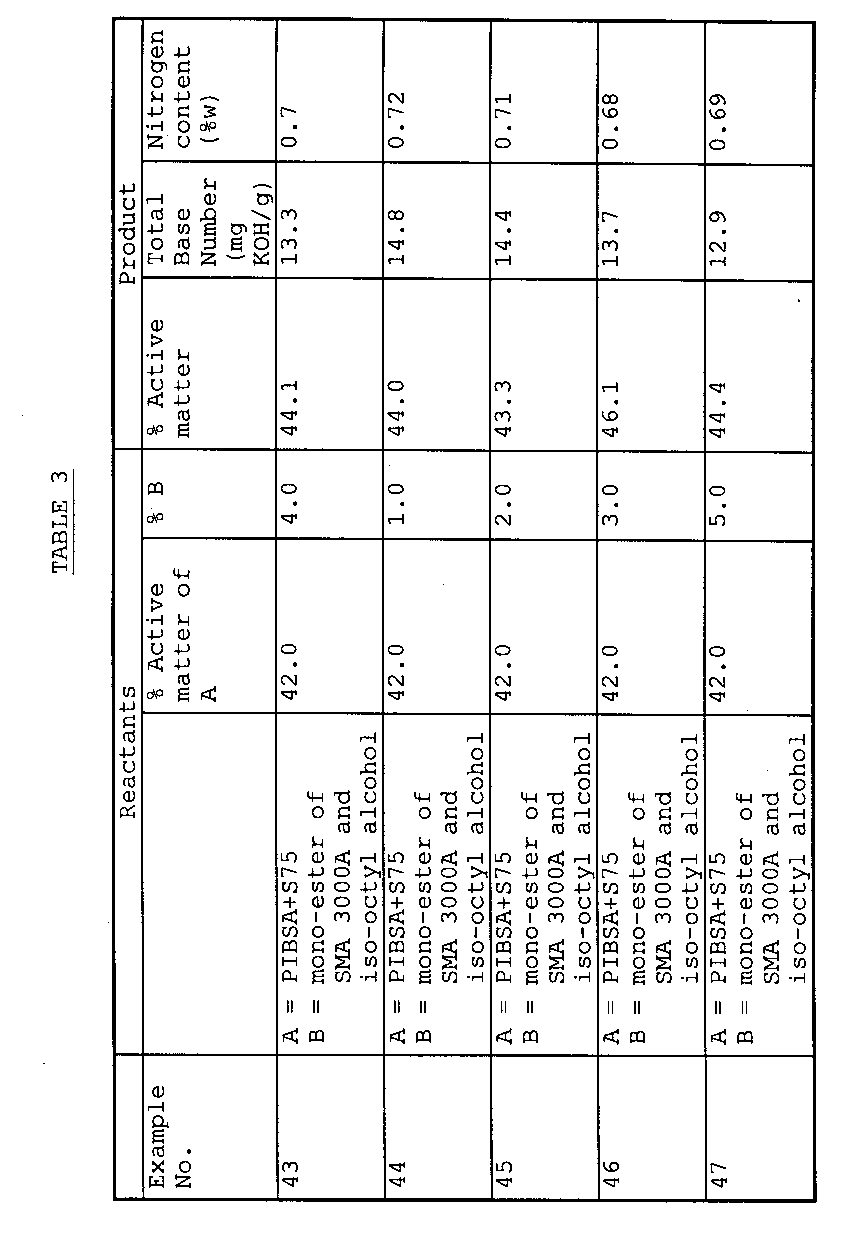

### Example 48

A C₁₀₋₂₀ straight chain alpha-olefin copolymerised with maleic anhydride ("PX-100" (Mₙ 2400) ex. Akzo Nobel GmbH) (2.5g) dissolved in "SHELLSOL A" (10 ml) was added to a stirred solution of the reaction product of PIBSA and S75 (having a coupling ratio (mols of PIBSA to mols of polyamine) of 1.5 ± 0.1) (50 g, 40.9% active matter) in "SHELLSOL A" (50 ml) at 140°C under nitrogen. The reaction temperature was increased and the "SHELLSOL A" and water were gradually removed by a Dean and Stark trap, over 4 hours. Once the temperature had reached 200°C the reaction was held at this temperature for 15 hours. The excess solvent was removed under reduced pressure (120°C at 5 mm Hg for 2 hours) to give a dark brown clear liquid (51g).

### Examples 49 to 52

By processes similar to that described in Example 48 above, further reaction products of the present invention were prepared.

Details of the types and amounts of the reagents used and the total base number and nitrogen content of the polyimide derivatives as obtained are presented in Table 4 below, in which the percentage of reactant B is of the total weight of reactant A without adjustment to take account of the percentage of active matter in A:-

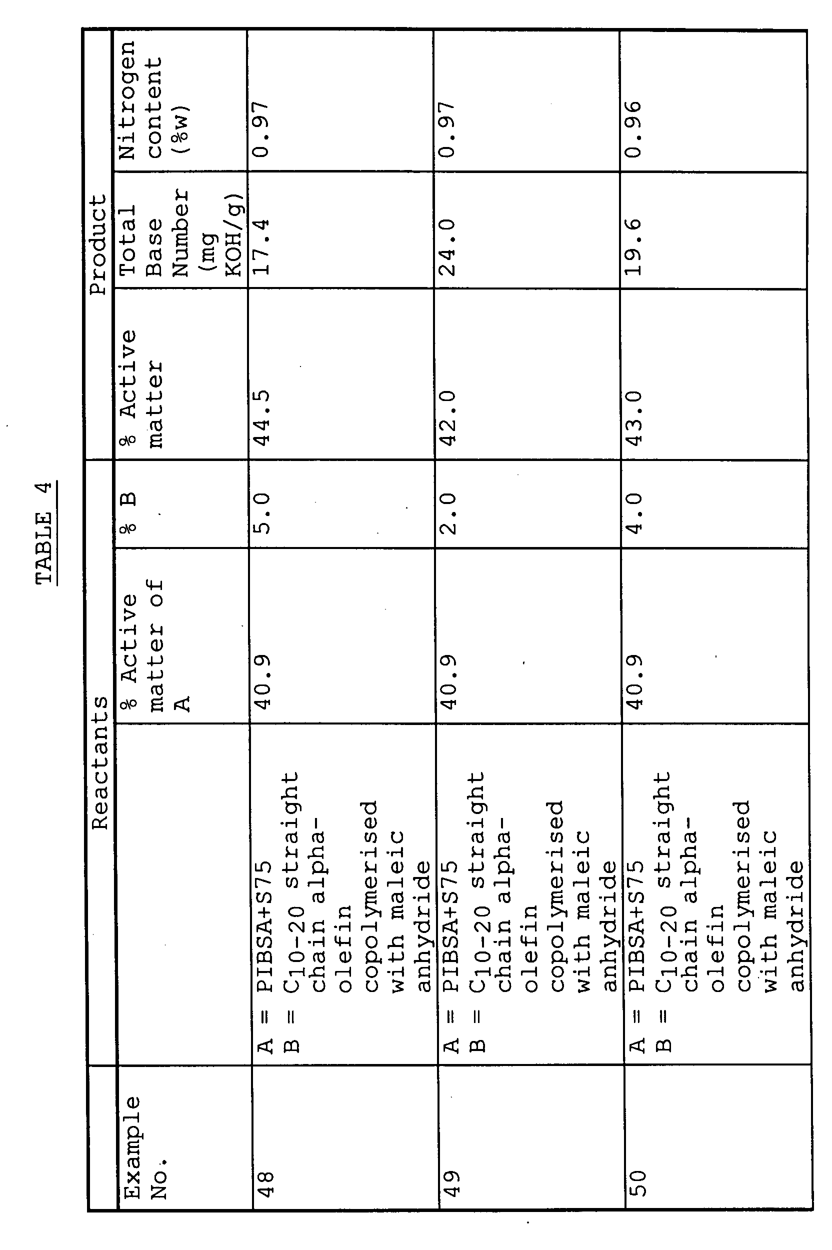

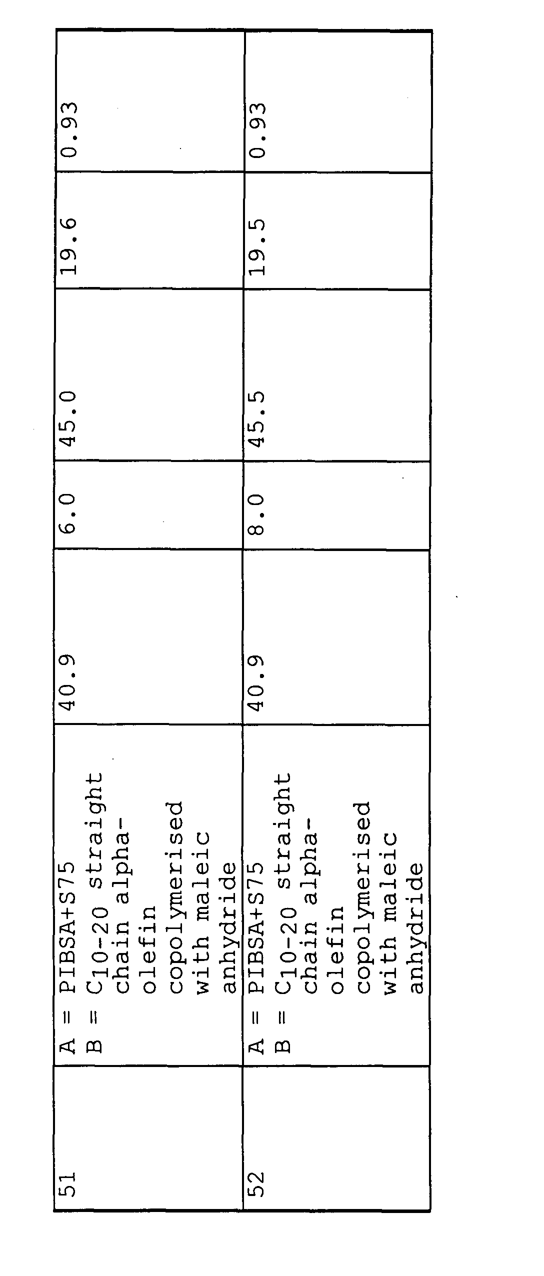

### Example 53

The n-pentanol ester of polyacrylic acid ("GOODRITE 752" (Mₙ 1000) ex. Goodrich Chemicals) (6.3g) dissolved in xylene (63 ml) was added to a stirred solution of the reaction product of PIBSA and TEPA (having a coupling ratio (mols of PIBSA to mols of polyamine) of 1.5 ± 0.1) (63g, 45.0% active matter) in xylene (63 ml) at 140°C under nitrogen. The reaction temperature was increased and the xylene and water were gradually removed by a Dean and Stark trap, over 4 hours. Once the temperature had reached 200°C the reaction was held at this temperature for 1 hour. The excess solvent was removed under reduced pressure (120°C at 5 mm Hg for 2 hours) to give a dark brown clear liquid (65g).

### Example 54

By a process similar to that described in Example 53 above, a further reaction product of the present invention was prepared.

Details of the types and amounts of the reagents used and the total base number and nitrogen content of the polyimide derivatives as obtained are presented in Table 5 below, in which the percentage of reactant B is of the total weight of reactant A without adjustment to take account of the percentage of active matter in A:-

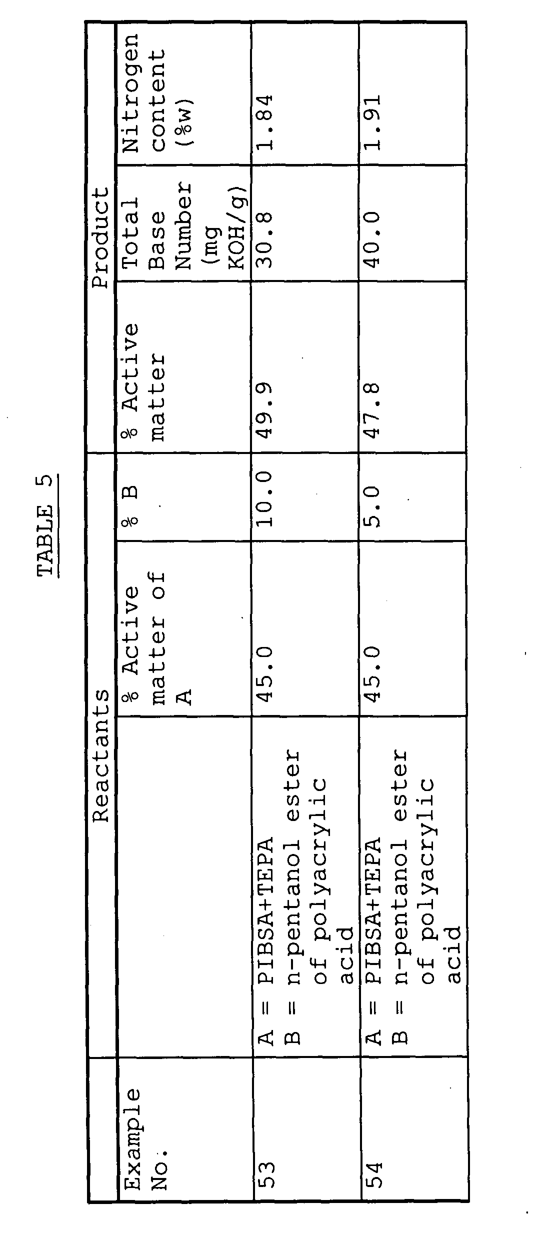

### Example 55

A styrene/acrylic acid copolymer ("MOREZ 300" (Mₙ 1300) ex. Morton International Limited) (7g) was added to a solution of the reaction product of PIBSA and S75 (having a coupling ratio (mols of PIBSA to mols of polyamine) of 1.5 ± 0.1) (100g) and titanium(IV) isopropoxide (0.15g) in "SHELLSOL A" (150g) at room temperature. A nitrogen purge was introduced and the temperature was increased to 120°C for 1 hour to dissolve the "MOREZ 300". The temperature was then increased and the "SHELLSOL A" and water were gradually removed by a Dean and Stark trap, over 4 hours. Once the temperature had reached 200°C, the reaction was held at this temperature for 24 hours. The product was dissolved in toluene and filtered. The excess solvent was removed under reduced pressure (120°C at 5 mm Hg for 2 hours) to give a dark brown liquid (100g).

### Examples 56 to 57

By processes similar to that described in Example 55 above, further reaction products of the present invention were prepared, the coupling ratio used in Example 56 being 2.0 ± 0.2.

Details of the types and amounts of the reagents used and, where known, the total base number and nitrogen content of the polyimide derivatives as obtained are presented in Table 6 below, in which the percentage of reactant B is of the total weight of reactant A without adjustment to take account of the percentage of active matter in A:-

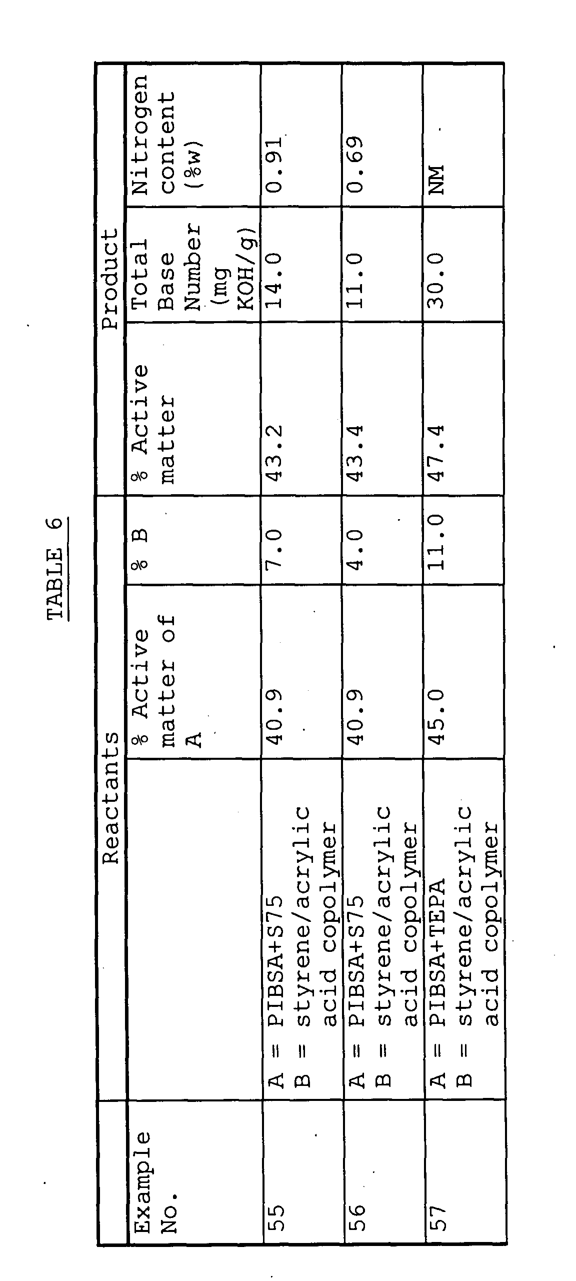

### Example 58

A mono-ester of "SMA 3000A" and iso-octyl alcohol ("SMA 3840A" ex. Elf-Atochem)(2g) dissolved in "SHELLSOL A" (20 ml) was added to a stirred solution of the reaction product of APOSA and S75 (having a coupling ratio (mols of APOSA to moles of polyamine of 1.5 ± 0.1)(50g) in "SHELLSOL A" (130 ml) at 140°C under nitrogen. The reaction temperature was increased and the "SHELLSOL A", water and any alcohol were gradually removed by a Dean and Stark trap, over 2 hours. Once the temperature had reached 200°C the reaction was held at this temperature for 1 hour. The excess solvent was removed under reduced pressure (120°C at 5 mm Hg for 2 hours) to give a dark brown clear liquid (50g).

### Examples 59 to 61

By processes similar to that described in Example 58 above, further reaction products of the present invention were prepared, the coupling-ratio used in Example 59 being 2.0 ± 0.2.

Details of the types and amounts of the reagents used and the total base number and nitrogen content of the polyimide derivatives as obtained are presented in Table 7 below, in which the percentage of reactant B is of the total weight of reactant A without adjustment to take account of the percentage of active matter in A:-

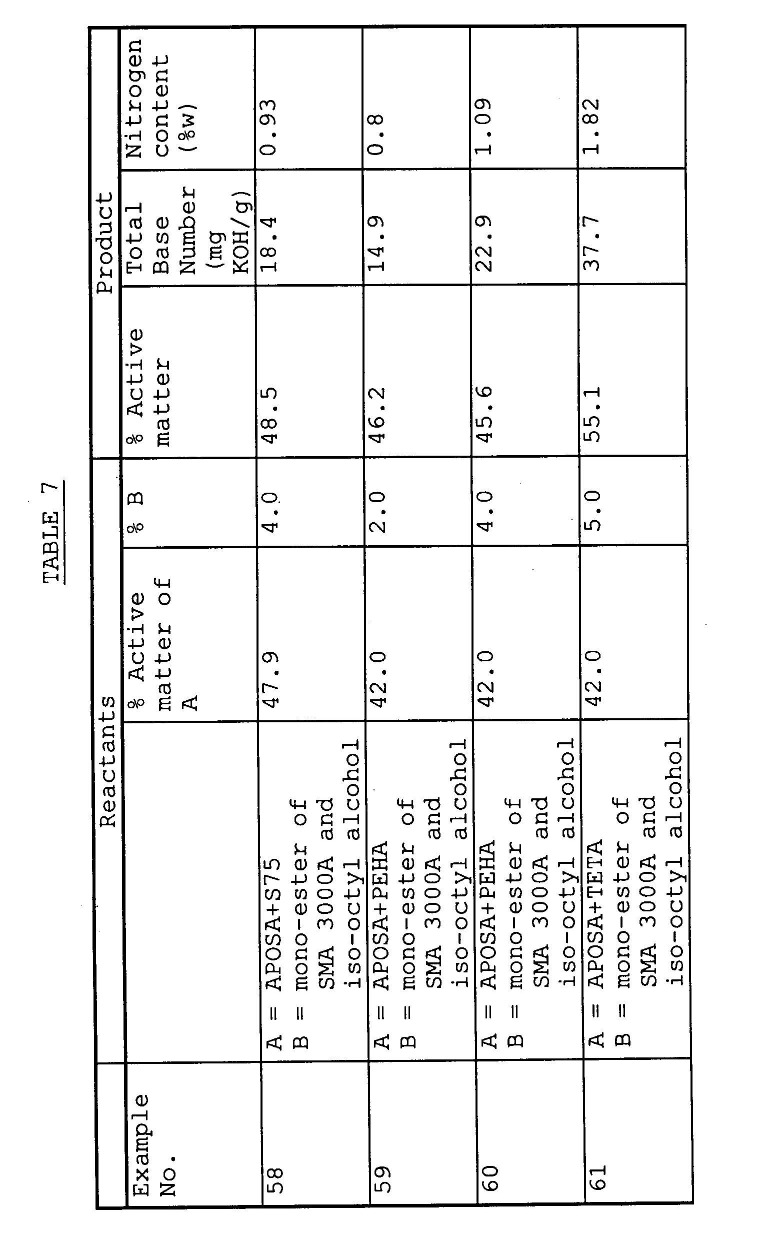

### Example 62

### Haze Test

"Haze" is that percentage of transmitted light which, in passing through the specimen, deviates from the incident beam by forward scattering. For the purpose of this method only light flux deviating more than 2.5° on average is considered to be haze.

The dispersant is dissolved in "HVI 60" oil, at 100°C, in a mass ratio of 1:9. The haze of the solution is measured by means of a pivotable-sphere hazemeter, applying a correction for the haze of the solvent. The hazemeter is as specified in ASTM D1003, with digital display reading to 0.1%.

Results of these tests are given in Table 8:

**TABLE 8**

| Example No. | Haze (%) | Example No. | Haze (%) |
|---|---|---|---|
| 1 | 5.0 | 29 | 2.2 |
| 2 | 9.6 | 30 | 5.0 |
| 3 | 8.8 | 31 | 1.0 |
| 4 | 6.2 | 32 | 0.4 |
| 5 | 7.1 | 33 | 2.8 |
| 6 | 7.9 | 34 | 2.0 |
| 7 | 5.2 | 35 | 1.8 |
| 8 | 6.0 | 36 | 4.3 |
| 9 | 10.3 | 39 | 6.5 |
| 10 | 7.0 | 40 | 4.0 |
| 12 | 14.7 | 48 | 5.4 |
| 13 | 3.4 | 49 | 5.2 |
| 14 | 4.8 | 50 | 6.8 |
| 15 | 4.5 | 51 | 5.5 |
| 16 | 4.6 | 52 | 6.9 |
| 17 | 5.1 | 53 | 3.3 |
| 18 | 6.5 | 54 | 2.4 |
| 19 | 6.7 | 55 | 1.0 |
| 20 | 9.3 | 56 | 1.0 |
| 21 | 11.0 | 57 | 3.0 |
| 22 | <1.0 | 58 | 3.7 |
| 24 | <1.0 | 59 | 2.4 |
| 26 | <1.0 | 60 | 4.6 |
| 27 | 1.3 | 61 | 1.6 |
| 28 | <1.0 | | |

It can be seen from the figures in Table 8 that reaction products of the present invention exhibit low levels of haze.

### Example 63

### Carbon Black Dispersancy Test (CBDT)

### (British Rail Publication BR 669: 1984)

Samples of a SAE 15W40 Middle East lubricating oil containing a commercial package of a zinc dialkyldithiophosphate, an overbased calcium alkyl salicylate and VI improver, were modified by incorporation of oligomeric reaction products of the Examples to give oils containing the derivatives at a concentration of 1%w active matter. 3%w of carbon black was then added to each oil and (percentage) increase in kinematic viscosity at 60°C was determined, using an Ubbelohde viscometer. A low result indicates good performance. The absolute values obtained are dependent on the active surface area of the carbon black used, and therefore comparative series should be tested with identical samples of carbon black. The tests were carried out using "Flamruss" (trade mark) carbon black.

The results of these tests are given in Table 9:

**TABLE 9**

| Example No. | CBDT (%) | Example No. | CBDT (%) |
|---|---|---|---|
| 1 | 15.3 | 24 | 15.3 |
| 2 | 14 | 26 | 16.2 |
| 3 | 18 | 27 | 14.7 |
| 4 | 23 | 28 | 18.4 |
| 5 | 13.7 | 29 | 15.2 |
| 6 | 15.9 | 30 | 15.3 |
| 7 | 15.9 | 31 | 14.8 |
| 8 | 15.5 | 32 | 15.3 |
| 9 | 18.3 | 37 | 14.8 |
| 10 | 19.5 | 38 | 15.3 |
| 11 | 20.3 | 40 | 17.6 |
| 12 | 17.2 | 41 | 18.1 |
| 22 | 15.7 | 42 | 16.7 |

### Example 64

### Rheology Test

### (Using a controlled strain rate rheometer (Couette geometry))

Carbon black (Cabot Vulcan XC72R), oven dried, is equilibrated at 100°C overnight using a heated stirrer block, with an appropriate concentration of the sample dispersant in an appropriate fully formulated test oil. The equilibrated sample is measured using a Couette geometry over a range of shear rates. An initial manual shear rate sweep is carried out to determine the appropriate sensitivity setting for the rheometer and to precondition the sample to eliminate any shear history. Subsequently the sample is left to temperature equilibrate for at least 10 minues before the measurement is made. As in the Carbon Black Dispersancy Test (CBDT), increases in viscosity which are lower than that with the parent dispersant, e.g. "SAP 230TP" and "SAP 285", indicate improved dispersancy over those succinimides.

The results of these tests are given in Table 10, the figures in brackets being those for the corresponding parent dispersants:

**TABLE 10**

| Example No. | Rheology (1s⁻¹) | | Example No. | Rheology (1s⁻¹) | |
|---|---|---|---|---|---|
| 1 | 1 | (5) | 32 | 0.5 | (3) |
| 6 | 1.5 | (5) | 33 | 1 | (3) |
| 7 | 2 | (5) | 34 | 0.5 | (3) |
| 8 | 0.5 | (5) | 35 | 0.5 | (3) |
| 9 | 0.5 | (5) | 36 | 0.5 | (3) |
| 10 | 0.5 | (5) | 39 | 1.2 | (3) |
| 12 | 0.5 | (5) | 40 | 1 | (3) |
| 13 | 4 | (5) | 42 | 3 | (5) |
| 14 | 2 | (5) | 43 | 5 | (8) |
| 15 | 4 | (5) | 44 | 6 | (8) |
| 16 | 2 | (5) | 45 | 4 | (8) |
| 17 | 3 | (5) | 46 | 5 | (8) |
| 18 | 3 | (5) | 47 | 5 | (8) |
| 19 | 4 | (5) | 48 | 2 | (4) |
| 20 | 4 | (5) | 49 | 2 | (4) |
| 22 | 2 | (3) | 50 | 2 | (4) |
| 24 | 1.5 | (3) | 51 | 2 | (4) |
| 26 | 1 | (3) | 52 | 3 | (4) |
| 27 | 0.5 | (3) | 53 | 1 | (3) |
| 28 | 0.5 | (3) | 54 | 1 | (3) |
| 29 | 0.5 | (3) | 55 | 0.5 | (3) |
| 30 | 0.5 | (3) | 56 | 1 | (3) |
| 31 | 0.5 | (3) | 57 | 0.5 | (2) |

### Example 65

### Corrosion Test

Compounds of the present invention display reduced corrosion, as demonstrated in the L-10 bench corrosion test without severity adjustment (ref. API CG-4 test). The results, at the same dispersant treat rates, were as follows:

**TABLE 11**

| Sample | Lead leached (ppm) |
|---|---|
| "SAP 230TP" | 18 |
| Example 27 | 5 |

### Example 66

### Fluoroelastomer Seals Test

Compounds of the present invention are less aggressive to fluoroelastomer seals, as demonstrated in the Mercedes Benz fluoroelastomer seal test. When seal fluoroelastomer was subjected to a formulation containing Example 47 its tensile strength was reduced by only 16% and the extent to which it could be stretched before breaking was reduced by only 15%; the reductions in an analogous formulation, at the same dispersant treat rate, containing, instead, "SAP 285", were greater:

**TABLE 12**

| Sample | Tensile strength | Elongation at break |
|---|---|---|
| "SAP 285" | -31% | -30% |
| Example 47 | -16% | -15% |

## Claims

1. The reaction product of:
(i) an oligomer having a number average molecular weight of no more than 7500 and being formed from one monomer or two or more different monomers, the or each monomer being an ethylenically unsaturated compound and said oligomer or each of said monomers being optionally partially or fully esterified, each of which monomers may not contain an ether moiety nor be a cyclopentadienyl group, said oligomer optionally being reacted with an amine having a molecular weight of 17 to 300, with
(ii) a polyalkenyl derivative of an ethylenically unsaturated carboxylic reagent (iii), which derivative has a number average molecular weight of at least 1600 when the oligomer is a co-oligomer of two monomers one of which is a straight chain olefin, and
(iv) a polyamine containing at least two -NH₂ and/or -NH groups, or with
(v) the pre-formed product of reagents (ii) and (iv),
wherein at least one of the ethylenically unsaturated compounds of the oligomer is an ethylenically unsaturated carboxylic reagent, the oligomeric reaction product optionally being further reacted with an amine having a molecular weight of 17 to 300.

2. A reaction product according to claim 1 wherein the amine having a molecular weight of 17 to 300 is aniline.

3. A reaction product according to Claim 1 or 2, wherein the ethylenically unsaturated carboxylic reagent (iii) is selected from monoethylenically unsaturated C₄₋₁₀ dicarboxylic acids and anhydrides.

4. A reaction product according to Claim 1, 2 or 3, wherein the polyalkenyl derivative is derived from a polyalkene which is a polymer of at least one C₂₋₅ monoolefin.

5. A reaction product according to any one of the preceding Claims, wherein the polyamine is a compound of the general formula
H₂N-(CHR¹)ₓ-CH₂-[A-CH₂-(CHR¹)ₓ]_{y}-NH₂ (I)
wherein A is -NH or -O-, each R¹ independently represents a hydrogen atom or a methyl group, x is in the range 1 to 3, and y is in the range 1 to 10 when A is -NH or y is in the range 1 to 200 when A is -O-.

6. A process for the preparation of a reaction product according to claim 1 which comprises reacting
(i) an oligomer having a number average molecular weight of no more than 7500 and being formed from one monomer or two or more different monomers, the or each monomer being an ethylenically unsaturated compound and said oligomer or each of said monomers being optionally partially or fully esterified, each of which monomers may not contain an ether moiety nor be a cyclopentadienyl group, said oligomer optionally being reacted with an amine having a molecular weight of 17 to 300, with
(ii) a polyalkenyl derivative of an ethylenically unsaturated carboxylic reagent (iii), which derivative has a number average molecular weight of at least 1600 when the oligomer is a co-oligomer of two monomers one of which is a straight chain olefin, and
(iv) a polyamine containing at least two -NH₂ and/or -NH groups, or with
(v) the pre-formed product of reagents (ii) and (iv),
wherein at least one of the ethylenically unsaturated compounds of the oligomer is an ethylenically unsaturated carboxylic reagent, the oligomeric reaction product optionally being further reacted with an amine having a molecular weight of 17 to 300.

7. A lubricating oil composition comprising more than 50%w of a lubricating oil and less than 50%w of a reaction product according to any one of Claims 1 to 5.

8. A fuel composition comprising more than 50%w of a fuel and less than 50%w of a reaction product according to any one of Claims 1 to 5.

9. An additive concentrate comprising an inert carrier fluid and from 10 to 80%w, based on the total concentrate, of a reaction product according to any one of Claims 1 to 5.

10. Use of a reaction product according to any one of Claims 1 to 5 as a dispersant additive.

## Patentansprüche

1. Reaktionsprodukt von:
(i) Oligomer, das ein durchschnittliches Molekulargewicht (Zahlenmittel) von nicht mehr als 7500 aufweist und aus einem Monomer oder zwei oder mehreren verschiedenen Monomeren gebildet worden ist, wobei das oder jedes Monomer eine ethylenisch ungesättigte Verbindung ist und das Oligomer oder jedes der Monomere gegebenenfalls teilweise oder vollständig verestert ist, wobei jedes der Monomere weder einen Etheranteil enthalten darf noch eine Cyclopentadienylgruppe sein darf, wobei das Oligomer gegebenenfalls mit Amin mit einem Molekulargewicht von 17 bis 300 umgesetzt worden ist, mit
(ii) Polyalkenylderivat von ethylenisch ungesättigtem Carboxyl-Reagenz (iii), welches Derivat ein durchschnittliches Molekulargewicht (Zahlenmittel) von mindestens 1600 aufweist, wenn das Oligomer ein Co-Oligomer von zwei Monomeren ist, von denen eines ein geradkettiges Olefin ist, und
(iv) Polyamin, das mindestens zwei -NH₂- und/oder -NH-Gruppen enthält, oder mit
(v) dem vorgebildeten Produkt der Reagenzien (ii) und (iv),
wobei mindestens eine der ethylenisch ungesättigten Verbindungen des Oligomers ein ethylenisch ungesättigtes Carboxyl-Reagenz ist und das oligomere Reaktionsprodukt gegebenenfalls weiter mit Amin mit einem Molekulargewicht von 17 bis 300 umgesetzt worden ist.

2. Reaktionsprodukt nach Anspruch 1, wobei das Amin mit einem Molekulargewicht von 17 bis 300 Anilin ist.

3. Reaktionsprodukt nach Anspruch 1 oder 2, wobei das ethylenisch ungesättigte Carboxyl-Reagenz (iii) ausgewählt ist aus monoethylenisch ungesättigten C₄₋₁₀-Dicarbonsäuren und -säureanhydriden.

4. Reaktionsprodukt nach Anspruch 1, 2 oder 3, wobei das Polyalkenylderivat abgeleitet ist aus Polyalken, das ein Polymer von mindestens einem C₂₋₅-Monoolefin ist.

5. Reaktionsprodukt nach einem der vorhergehenden Ansprüche, wobei das Polyamin eine Verbindung der allgemeinen Formel
H₂N-(CHR¹)ₓ-CH₂-[A-CH₂-(CHR¹)ₓ]_{y}-NH₂ (I)
ist, worin A -NH oder -O- ist, jedes R¹ unabhängig ein Wasserstoffatom oder eine Methylgruppe wiedergibt, x im Bereich von 1 bis 3 liegt und y im Bereich von 1 bis 10 liegt, wenn A -NH ist, oder y im Bereich von 1 bis 200 liegt, wenn A -O- ist.

6. Verfahren zur Herstellung eines Reaktionsprodukts gemäß Anspruch 1, bei dem
(i) Oligomer, das ein durchschnittliches Molekulargewicht (Zahlenmittel) von nicht mehr als 7500 aufweist und aus einem oder zwei oder mehreren verschiedenen Monomeren gebildet worden ist, wobei das oder jedes Monomer eine ethylenisch ungesättigte Verbindung ist und das Oligomer oder jedes der Monomere gegebenenfalls teilweise oder vollständig verestert ist, wobei jedes der Monomere weder einen Etheranteil enthalten darf noch eine Cyclopentadienylgruppe sein darf, wobei das Oligomer gegebenenfalls mit Amin mit einem Molekulargewicht von 17 bis 300 umgesetzt wird, mit
(ii) Polyalkenylderivat von ethylenisch ungesättigtem Carboxyl-Reagenz (iii), welches Derivat ein durchschnittliches Molekulargewicht (Zahlenmittel) von mindestens 1600 aufweist, wenn das Oligomer ein Co-Oligomer von zwei Monomeren ist, von denen eines ein geradkettiges Olefin ist, und
(iv) Polyamin, das mindestens zwei -NH₂- und/oder -NH-Gruppen enthält, umgesetzt wird, oder mit
(v) dem vorgebildeten Produkt der Reagenzien (ii) und (iv),
wobei mindestens eine der ethylenisch ungesättigten Verbindungen des Oligomers ein ethylenisch ungesättigtes Carboxyl-Reagenz ist und das oligomere Reaktionsprodukt gegebenenfalls weiter mit Amin mit einem Molekulargewicht von 17 bis 300 umgesetzt wird.

7. Schmierölzusammensetzung, die mehr als 50 Gew.-% Schmieröl und weniger als 50 Gew.-% Reaktionsprodukt gemäß einem der Ansprüche 1 bis 5 umfasst.

8. Brennstoffzusammensetzung, die mehr als 50 Gew.-% Brennstoff und weniger als 50 Gew.-% Reaktionsprodukt gemäß einem der Ansprüche 1 bis 5 umfasst.

9. Additivkonzentrat, das inertes Trägerfluid und von 10 bis 80 Gew.-%, bezogen auf das gesamte Konzentrat, Reaktionsprodukt gemäß einem der Ansprüche 1 bis 5 umfasst.

10. Verwendung eines Reaktionsprodukts gemäß einem der Ansprüche 1 bis 5 als Dispergiermitteladditiv.

## Revendications

1. Produit de réaction :
(i) d'un oligomère ayant une moyenne en nombre du poids moléculaire non supérieure à 7500 et étant formé à partir d'un monomère ou bien de deux ou plus de deux monomères différents, le ou chaque monomère étant un composé à insaturation éthylénique et ledit oligomère ou chacun desdits monomères étant facultativement partiellement ou totalement estérifié, chacun de ces monomères ne pouvant contenir un groupement éther et ne pouvant consister en un groupe cyclopentadiényle, ledit oligomère étant facultativement amené à réagir avec une amine ayant un poids moléculaire de 17 à 300, avec
(ii) un dérivé polyalcénylique d'un réactif carboxylique à insaturation éthylénique (iii), dérivé qui a une moyenne en nombre du poids moléculaire d'au moins 1600 lorsque l'oligomère est un co-oligomère de deux monomères dont l'un est une oléfine à chaîne droite, et
(iv) une polyamine contenant au moins deux groupes -NH₂ et/ou -NH, ou avec
(v) le produit préformé des réactifs (ii) et (iv),
dans lequel au moins un des composés à insaturation éthylénique de l'oligomère est un réactif carboxylique à insaturation éthylénique, le produit de réaction oligomère étant facultativement soumis en outre à une réaction avec une amine ayant un poids moléculaire de 17 à 300.

2. Produit de réaction suivant la revendication 1, dans lequel l'amine ayant un poids moléculaire de 17 à 300 est l'aniline.

3. Produit de réaction suivant la revendication 1 ou 2, dans lequel le réactif carboxylique à insaturation éthylénique (iii) est choisi parmi des acides et anhydrides dicarboxyliques en C₄ à C₁₀ à insaturation monoéthylénique.

4. Produit de réaction suivant la revendication 1, 2 ou 3, dans lequel le dérivé polyalcénylique est dérivé d'un polyalcène qui est un polymère d'au moins une mono-oléfine en C₂ à C₅.

5. Produit de réaction suivant l'une quelconque des revendications précédentes, dans lequel la polyamine est un composé de formule générale
H₂N-(CHR¹)x-CH₂-[A-CH₂-(CHR¹)x]y-NH₂ (I)
dans laquelle A représente un groupe -NH ou -O-, chaque groupe R¹ représente indépendamment un atome d'hydrogène ou un groupe méthyle, x a une valeur de 1 à 3 et y a une valeur de 1 à 10 lorsque A représente un groupe -NH ou bien y a une valeur de 1 à 200 lorsque A représente -O-.

6. Procédé pour la préparation d'un produit de réaction suivant la revendication 1, qui comprend la réaction
(i) d'un oligomère ayant une moyenne en nombre du poids moléculaire non supérieure à 7500 et étant formé à partir d'un monomère ou bien de deux ou plus de deux monomères différents, le ou chaque monomère étant un composé à insaturation éthylénique et ledit oligomère ou chacun desdits monomères étant facultativement partiellement ou totalement estérifié, chacun de ces monomères ne pouvant contenir un groupement éther et ne pouvant être un groupe cyclopentadiényle, ledit oligomère étant facultativement amené à réagir avec une amine ayant un poids moléculaire de 17 à 300, avec
(ii) un dérivé polyalcénylique d'un réactif carboxylique à insaturation éthylénique (iii), dérivé qui a une moyenne en nombre du poids moléculaire d'au moins 1600 lorsque l'oligomère est un co-oligomère de deux monomères dont l'un est une oléfine à chaîne droite, et
(iv) une polyamine contenant au moins deux groupes -NH₂ et/ou -NH, ou avec
(v) le produit préformé des réactifs (ii) et (iv),
dans lequel au moins un des composés à insaturation éthylénique de l'oligomère est un réactif carboxylique à insaturation éthylénique, le produit de réaction oligomère étant facultativement soumis en outre à une réaction avec une amine ayant un poids moléculaire de 17 à 300.

7. Composition d'huile lubrifiante comprenant plus de 50 % en poids d'une huile lubrifiante et moins de 50 % en poids d'un produit de réaction suivant l'une quelconque des revendications 1 à 5.

8. Composition de carburant comprenant plus de 50 % en poids d'un carburant et moins de 50 % en poids d'un produit de réaction suivant l'une quelconque des revendications 1 à 5.

9. Concentré d'additif comprenant un fluide inerte servant de véhicule et 10 à 80 % en poids, sur la base du concentré total, d'un produit de réaction suivant l'une quelconque des revendications 1 à 5.

10. Utilisation d'un produit de réaction suivant l'une quelconque des revendications 1 à 5 comme additif dispersant.
